# EUROPEAN PATENT APPLICATION

(11) **EP 4 614 758 A1**
(43) Date of publication of application: **10.09.2025**
(21) Application number: 24161147.4
(22) Date of filing: 04.03.2024
(51) Int. Cl.: H02J 7/00, B60L 50/64, B60R 16/033, H01H 9/02

(54) **A BATTERY PACK ARRANGEMENT**

(71) Applicant: VOLVO TRUCK CORPORATION, 405 08 Göteborg (SE)
(72) Inventor: LUNDQVIST, Henrik, 435 37 MÖLNLYCKE (SE); THELIN, Tomas, 442 70 KÄRNA (SE); LIDSTRÖM, Emil, 423 56 TORSLANDA (SE)
(74) Representative: Kransell & Wennborg KB

(57) **Abstract**

A battery pack arrangement (30) comprising: a battery pack (31) comprising a plurality of battery cells (33) arranged in a battery pack housing (35); a battery pack service unit (40) for managing the battery pack (31), the battery pack service unit (40) being arranged in a service unit housing (42) arranged remotely of the battery pack housing (35); a communication link (50) arranged between the battery pack housing (35) and the service unit housing (42) for enabling the battery pack service unit (40) to communicate with the battery pack (31); and a power cable or power rail (60) arranged between the battery pack housing (35) and the service unit housing (42) for enabling transmission of a high voltage current between the battery pack (31) and the service unit (40). The battery pack service unit (40) comprises at least a first contactor (44) configured to disconnect the battery pack (31) from a load and/or a power source (10).

## Description

### TECHNICAL FIELD

The disclosure relates generally to a battery pack arrangement. In particular aspects, the disclosure relates to a battery pack arrangement comprising a battery pack and a battery pack service unit. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

A vehicle typically comprises an engine for propelling the vehicle. The engine may be powered by various means, such as e.g. by liquid or gaseous fuel in an internal combustion engine. Alternatively, the vehicle may be propelled by electric power in an electric machine. Moreover, hybrid solutions exist in which the vehicle is propelled both by an internal combustion engine and an electric machine. In either way, an energy storage device is used to store the energy needed in order to power the electric machine. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs which are configured to power the electric machine as well as electrically driven auxiliary equipment. The electric machine and/or the electrically driven auxiliary equipment may be commonly referred to as a load. Several batteries, or several series-connected and/or parallel connected battery cells, may be grouped into the battery pack. The battery pack is periodically in need of charging, and is then electrically connected to an electrical energy source, e.g. via a plug directly connected to the power grid, or by an on-board charger. Such chargers may commonly be referred to as a power source. An energy storage system comprising one or more battery packs may be referred to as a battery pack arrangement. In many applications, several battery packs are included in the battery pack arrangement, e.g. by being parallelly connected, e.g. to a common traction voltage bus.

Regardless of if there is one or more battery packs included in the battery pack arrangement, the battery pack(s) takes up space and there is a constant need in the field to reduce the size of the battery packs and/or increase the power per occupied space of the battery pack(s).

### SUMMARY

According to a first aspect of the disclosure, a battery pack arrangement is disclosed. The battery pack arrangement comprises: a battery pack comprising a plurality of battery cells arranged in a battery pack housing; a battery pack service unit for managing the battery pack, the battery pack service unit being arranged in a service unit housing arranged remotely of the battery pack housing; a communication link arranged between the battery pack housing and the service unit housing for enabling the battery pack service unit to communicate with the battery pack; and a power cable or power rail arranged between the battery pack housing and the service unit housing for enabling transmission of a high voltage current between the battery pack and the service unit; wherein the battery pack service unit comprises at least a first contactor configured to disconnect the battery pack from a load and/or a power source. The first aspect of the disclosure may seek to overcome problems with limited space for the battery pack. That is, by the first aspect, and in particular arranging the battery pack service unit and service unit housing remotely from the battery pack and the battery pack housing, and wherein the service unit comprises at least a first contactor configured to disconnect the battery pack from a load and/or a power source, the battery pack may be made smaller and/or the occupied space from the battery pack may be better utilized, e.g. by including more battery cells in the battery pack. Hereby, the design flexibility and space utilization of the battery pack arrangement may be improved. Thus, the separation of the service unit housing and the battery pack housing may allow for more efficient use of space, potentially enabling larger or more powerful battery packs and/or more optimal distribution of weight and components. By including at least a first contactor configured to disconnect the battery pack from a load and/or a power source in the battery pack service unit, a remotely controlled disconnection of the battery pack is also enabled. The remote location of the battery pack service unit and service unit housing as compared to the battery pack and battery pack housing may also facilitate access for maintenance, repair, and diagnostic activities. By not having the battery pack service unit co-located with the battery pack, service personnel can more easily access the battery pack service unit without the need to dismantle major battery pack components or the battery pack itself, potentially reducing service time and potentially lowering maintenance costs. Moreover, the dual provision of the communication link on one hand, and the power cable or power rail on the other hand, may enhance the reliability of the battery pack arrangement by ensuring that both data transmission and power management can occur seamlessly, even over a distance between the battery pack and the battery pack service unit. A technical benefit may include improved space utilization of the battery pack arrangement. Another technical benefit may include improved design flexibility of the battery pack arrangement and/or improved management of the battery pack arrangement. It should be noted that the plurality of battery cells in the battery pack may be series-connected and/or parallelly connected. For example, a predetermined number of the battery cells in the battery pack may be connected in parallel to form a "logical cell" and then several "logical cells" may be connected in series inside the battery pack.

Optionally in some examples, including in at least one preferred example, the battery pack comprises a battery pack terminal electrically connected to the plurality of battery cells, wherein the power cable or power rail is coupled to the battery pack terminal. A technical benefit may include an advantageous battery pack power interface for the power cable or power rail.

Optionally in some examples, including in at least one preferred example, the battery pack service unit comprises a service unit terminal electrically connected to the at least one contactor, wherein the power cable or power rail is coupled to the service unit terminal. A technical benefit may include an advantageous service unit power interface for the power cable or power rail. Thus, the power cable or power rail may extend from the battery pack terminal to the service unit terminal. As the at least one contactor is connected to the service unit terminal, e.g. by being directly connected, or series-connected, with the service unit terminal, the power transfer in the power cable or power rail between the battery pack and the battery pack service unit may be controlled by controlling the contactor, e.g. breaking the power transfer by opening the contactor.

Optionally in some examples, including in at least one preferred example, the battery pack arrangement further comprises a second contactor configured to disconnect the battery pack from the load and/or the power source, wherein the second contactor is comprised in the battery pack housing. A technical benefit may include space savings for the battery pack with regards to the total number of contactors for the battery pack, as at least one contactor is arranged within the service unit housing, while maintaining redundant disconnection possibilities of the battery pack, as at least one contactor is arranged within the battery pack housing. Moreover, by splitting the total number of contactors between the battery pack and the battery pack service unit, i.e. by having at least the first contactor arranged in the service unit housing and at least the second contactor arranged in the battery pack housing, improved safety with regards to electrical interference when e.g. transporting or reassembling the battery pack.

Optionally in some examples, including in at least one preferred example, the first contactor is one of a positive and negative contactors for the battery pack, and the second contactor is the other one of the positive and negative contactors for the battery pack. A technical benefit may include the possibility to completely isolate the battery pack from the power source and/or load (or and any other internal or external circuits to e.g. other battery packs). Thus, the first contactor arranged in the service unit housing is coupled to one of the poles of the battery pack (i.e. the positive or negative), while the second contactor arranged in the battery pack housing is coupled to the other pole of the battery pack.

Optionally in some examples, including in at least one preferred example, the battery pack arrangement further comprises a second contactor configured to disconnect the battery pack from the load and/or the power source, wherein the second contactor is comprised in the battery pack service unit. A technical benefit may include further space savings for the battery pack with regards to the total number of contactors for the battery pack.

Optionally in some examples, including in at least one preferred example, the battery pack arrangement comprises a plurality of second contactors, wherein the second contactor comprised in the battery pack housing is a first one of the second contactors, and the second contactor is a second one of the second contactors. A technical benefit may include space savings for the battery pack with regards to the total number of contactors for the battery pack, as at least two contactors are arranged within the service unit housing, while maintaining redundant disconnection possibilities of the battery pack, as at least one contactor is arranged within the battery pack housing.

Optionally in some examples, including in at least one preferred example, the power cable or power rail has a length of at least 0.1 m. A technical benefit may include a suitable tradeoff between physical separation for achieving design flexibility and space utilization of the battery pack arrangement on one hand, and limited costs for the power cable or power rail on the other hand. The power cable or power rail may be several meters long, e.g. up to 10 m. Moreover, in case for a power cable, the power cable may be flexible for facilitated routing.

Optionally in some examples, including in at least one preferred example, the battery pack housing comprises a first access opening and the service unit housing comprises a second access opening, wherein the power cable or power rail is routed from the battery pack, through the first access opening to externally of both the battery pack housing and the service unit housing, and to the battery pack service unit through the second access opening. A technical benefit may include efficient structures for enabling the power cable or power rail to be electrically and physically connected between the battery pack and the battery pack service unit.

Optionally in some examples, including in at least one preferred example, the battery pack service unit comprises a PCB with battery management functionality. A technical benefit may include reliable battery pack management functionality within the service unit. Typically, the battery pack housing does not house a PCB with battery management functionality for the battery pack.

Optionally in some examples, including in at least one preferred example, the battery pack service unit comprises at least a first pre-charge circuitry for the battery pack. A technical benefit may include space savings for the battery pack with regards to the pre-charge circuity, while maintaining desirable functionality of the battery pack. Typically, the battery pack housing does not house a pre-charge circuitry for the battery pack.

Optionally in some examples, including in at least one preferred example, the battery pack service unit comprises a sensing board configured to receive sensor data of the battery pack. A technical benefit may include space savings for the battery pack with regards to the sensing board, while maintaining desirable functionality of the battery pack. Typically, the battery pack housing does not comprise a sensing board for the battery pack.

Optionally in some examples, including in at least one preferred example, the battery pack comprises at least one sensor for providing sensor data of the plurality of battery cells, wherein the communication link is arranged to transfer the sensor data from the at least one sensor inside the battery pack housing, to the sensing board inside the service unit housing. A technical benefit may include communication of reliable sensor data while providing a space efficient solution with regards to the battery pack.

Optionally in some examples, including in at least one preferred example, the battery pack arrangement further comprises a cooling circuity arranged externally of the battery pack housing, wherein the cooling circuitry is configured to cool the battery pack service unit. A technical benefit may include space savings for the battery pack with regards to the cooling circuitry for the battery pack service unit. Typically, the cooling circuitry for the battery pack service unit is at least partly arranged inside, and/or in contact with, the service unit housing.

Optionally in some examples, including in at least one preferred example, the power cable or power rail is configured for voltages over 300 V, such as e.g. between 300 V and 2000 V, or between 300 V and 1500 V. A technical benefit may include a power cable or power rail being able to power various type of loads, or high voltage loads. For example, in case the battery pack arrangement is for a vehicle, the above mentioned voltages are suitable for loads of a vehicle, e.g. electric propulsion (i.e. power cable or power rail configured for powering the electric traction machine of the vehicle). Thus, the power cable or power rail may be configured to transfer electric traction machine currents, i.e. currents adapted for operating or powering the electric traction machine. Moreover, the above mentioned voltages may enable a reduction in conductor size as compared to power cables or power rails providing the same current but at a lower voltage. The power cable or power rail is configured to transfer high voltage current, typically direct current. The high voltage current may be referred to as current transferred at high voltage, wherein the high voltage is at least 300 V, such as e.g. between 300 V and 2000 V. Additionally or alternatively, the high voltage may be referring to high voltage with regards to the vehicle (typically above 60 V). The high voltage of a vehicle is thus fundamentally different to the low voltage of the vehicle, the latter typically being 12 V or 24 V (or even 48 V). The power cable or power rail may be configured to transfer high current and/or high power.

Optionally in some examples, including in at least one preferred example, the battery pack is a first battery pack and the battery pack housing is a first battery pack housing, wherein the battery pack arrangement further comprises a second battery pack comprising a plurality of battery cells arranged in a second battery pack housing, and wherein the communication link is further arranged between the second battery pack housing and the service unit housing for enabling the battery pack service unit to communicate with the second battery pack, and the power cable or power rail being further arranged between the second battery pack housing and the service unit housing for enabling transmission of a high voltage current between the second battery pack and the service unit. A technical benefit may include improved space utilization of the battery pack arrangement. Thus, the first and second battery packs share the same battery pack service unit. The battery pack service unit may be referred to as a common, centralized, service unit. Thus, communication and power management of the first and second battery packs may be achieved by the battery pack service unit. In some examples, the service unit housing is arranged remotely of the second battery pack housing. Effects, features and embodiments of the remote arrangement between the second battery pack housing and the service unit housing are largely analogous to those described above in connection with the remote arrangement between the first battery pack housing and the service unit housing. Moreover, the first and second battery pack housings may be arranged remotely from each other, further improving the design flexibility and space utilization of the battery pack arrangement. The first battery pack housing may be remotely arranged from the second battery pack in a corresponding manner as the first battery pack housing relative to the service unit housing. However, according to some examples, the first and second battery pack housings are not arranged remotely from each other. For example, the first and second battery pack housings may be arranged adjacent each other, e.g. by being arranged within 0.1 m from each other or by that the first battery pack housing at least partly is arranged in contact with the second battery pack housing. Optionally in some examples, the battery pack service unit is configured to support further battery packs. Hereby, modular system design for the battery pack arrangement is provided. This modularity may support scalability, making it easier to adapt the power needs and energy capacity to different applications or user requirements by adding or removing battery packs, while keeping the same battery pack service unit. For example, the battery pack arrangement may be adapted for different sizes and types of vehicles by simply adjusting the number and capacity of the battery packs without a complete redesign of the battery management system.

Optionally in some examples, including in at least one preferred example, the previously mentioned second contactor comprised in the first battery pack housing is configured to disconnect the battery pack from the load and/or the power source and/or the second battery pack. A technical benefit may include improved possibilities to disconnect the first battery pack.

Optionally in some examples, including in at least one preferred example, the first contactor is further configured to disconnect the second battery pack from the load and/or the power source, the first contactor being one of the positive and negative contactors for the first battery pack, and one of the positive and negative contactors for the second battery pack, and the second contactor being the other one of the positive and negative contactors for the first battery pack, and wherein the battery pack arrangement further comprises a third contactor configured to disconnect the second battery pack from the load and/or the power source and/or the first battery pack, the third contactor being the other one of the positive and negative contactors for the second battery pack, wherein the second and third contactors are comprised in the first and second battery pack housings, respectively. A technical benefit may include space savings for the first and second battery packs with regards to the total number of contactors for the battery packs, as at least one contactor is arranged within the service unit housing, while maintaining redundant disconnection possibilities of the battery packs, as at least one contactor is arranged within each one of the first and second battery pack housings. The second contactor may e.g. be arranged at the corresponding terminal of the battery pack, or in between two battery cells of the battery pack.

Optionally in some examples, including in at least one preferred example, the battery pack arrangement is for a vehicle. A technical benefit may include the advantageous effects previously mentioned, but for a vehicle.

Optionally in some examples, including in at least one preferred example, the battery pack housing and the service unit housing are arranged on opposite sides of a vehicle frame of the vehicle. A technical benefit may include an advantageous physical separation of the service unit housing and the battery pack housing. The vehicle frame is typically the main vehicle frame.

The term "remotely" as used in the context of this disclosure, refers to the physical relation between the battery pack housing and the service unit housing, and thus, the physical relation between the battery pack and the battery pack service unit. As the service unit housing is arranged remotely to the battery pack housing, the physical placement or position of the service unit housing is different to, and separated from, the physical placement or position of the battery back housing. This separation implies that the service unit and the battery pack are not integrated into a single housing or module but are instead housed in distinct housings forming physically separated units that are connected via the communication link and the power transmission means (i.e. the power cable or power rail). In other words, the battery pack service unit is not arranged within the same housing or enclosure as the battery pack (and battery cells). Moreover, it should be understood that despite the physical separation of the battery pack housing and the service unit housing, the battery pack service unit maintains a functional connection to the battery pack through the communication link and power transmission means, allowing for the management, monitoring, and control of the operation of the battery pack. As previously described, the remote placement of the service unit housing relative to the battery pack housing may enhance accessibility for maintenance and service and offers greater flexibility in the design aspects of the battery pack arrangement and space utilization. In other words, the service unit housing may be separated from the battery pack housing by a distance greater than zero. For example, the service unit housing may be arranged not to be contact with the battery pack housing. Moreover, the components of the battery pack service unit is typically physically separated from the components of the battery pack, typically by at least one housing wall, preferably two housing walls (e.g. one housing wall comprised in the service unit housing and one housing wall comprised in the battery pack housing) typically separated by a gap, such as an air or gas gap. For example, for embodiments in which the battery pack arrangement is arranged on a vehicle, the physical placement or position of the service unit housing is in a first location of the vehicle, and the physical placement or position of the battery pack housing is in a second location of the vehicle, different to the first location of the vehicle. As previously exemplified, the first location may be separated in space from the second location by at least 0.1 m. The first and second locations can be optimized based on the vehicle's architecture and design requirements.

According to a second aspect of the disclosure, a vehicle comprising the battery pack arrangement of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the battery pack housing and the service unit housing are arranged on opposite sides of a vehicle frame of the vehicle. A technical benefit may include an advantageous physical separation of the service unit housing and the battery pack housing.

Optionally in some examples, including in at least one preferred example, the vehicle further comprises an electric machine being powered by the battery pack arrangement. The electric machine may be configured for propelling the vehicle. Thus, the electric machine may be referred to as an electric traction machine.

Optionally in some examples, including in at least one preferred example, the operating voltage of the battery pack arrangement is adaptable by the number of battery packs in the battery pack arrangement, wherein the number of battery packs in the battery pack arrangement corresponds to the associated requirements of the electric machine. A technical benefit may include an efficient way to adapt the operating voltage of the battery pack arrangement of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, perspective view of an electric vehicle comprising an electric machine for propelling the vehicle and a battery pack arrangement for powering the electric machine according to one example.
**FIG. 2** is an exemplary, partly schematic, view of a battery pack arrangement according to one example.

### DETAILED DESCRIPTION

The detailed description set forth below provides information and examples of the disclosed technology with sufficient detail to enable those skilled in the art to practice the disclosure.

The disclosed technology may solve the problem related to spacious battery packs of a battery pack arrangement. The disclosed technology may provide battery pack(s) taking up less space and/or which can provide a higher power per occupied space. That is, by arranging the battery pack service unit and service unit housing remotely from the battery pack and the battery pack housing, and including at least a first contactor configured to disconnect the battery pack from a load and/or a power source in the service unit housed in the service unit housing, the battery pack may be made smaller and/or the occupied space from the battery pack may be better utilized, e.g. by including more battery cells in the battery pack (and e.g. increasing the power per occupied space for the battery pack). A technical benefit may include improved space utilization of the battery pack arrangement. Another technical benefit may include improved design flexibility of the battery pack arrangement and/or improved management of the battery pack arrangement.

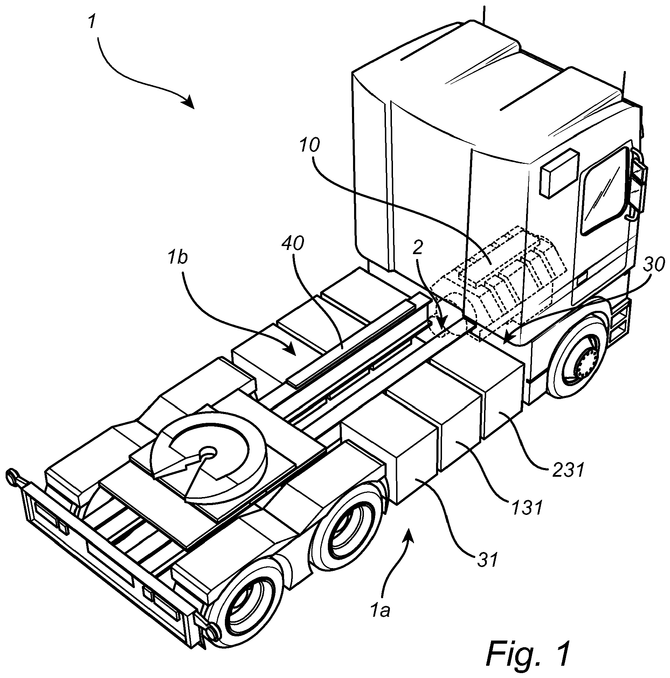

**FIG. 1** shows a vehicle 1 in the form of an exemplary heavy-duty truck. The vehicle 1 is an electric vehicle, such as a full electric vehicle or a hybrid, comprising a main vehicle frame 2 and at least one electric machine 10 (as an electric traction machine) powered by a battery pack arrangement 30, wherein in the example of Fig. 1, the battery pack arrangement 30 comprises three parallelly connected battery packs 31, 131, 231. The three battery packs 31, 131, 231 are configured to power at least one load, such as the electric machine 10. Moreover, the vehicle 1 comprises a battery pack service unit 40 configured for managing the battery packs 31, 131, 231. As seen in Fig. 1, and as will be described in the following, the battery pack service unit 40 is remotely arranged relative the three battery packs 31, 131, 231, here exemplified by that the three battery packs 31, 131, 231 are all arranged in a first location 1a of the vehicle, and by that the battery pack service unit 40 is arranged in a second location 1b of the vehicle 1. The first location 1a is different, and distant, to the second location 1b, hereby that the first location 1a is arranged on a first side of the main vehicle frame 2 and that the second location 1b is arranged on a second side of the main vehicle frame 2, the first and second sides being opposite sides of the main vehicle frame 2. The vehicle 1 typically further comprises other parts of the powertrain such as transmission, drive shafts and wheels (not shown in detail). The electric machine 10 may be operated as an electric motor consuming electricity provided by the battery packs 31, 131, 231, e.g. to provide propulsion power, and may be operated as a generator to generate electricity to charge the battery packs 31, 131, 231.

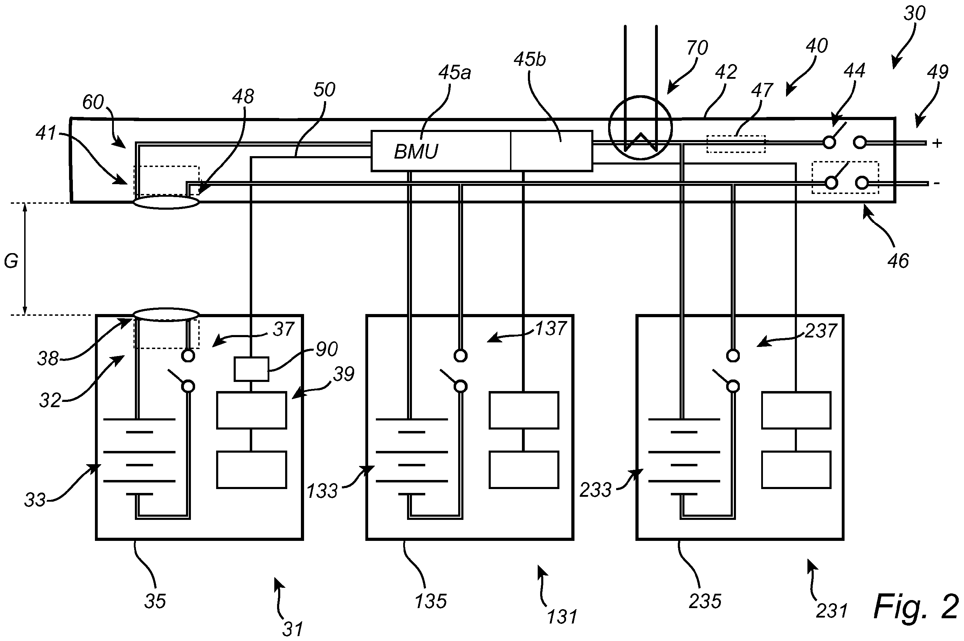

In **FIG. 2**, the battery pack arrangement 30 is shown in greater detail. The battery pack arrangement 30 comprises a first battery pack 31 comprising a plurality of battery cells 33 arranged in a first battery pack housing 35, a second battery pack 131 comprising a plurality of battery cells 133 arranged in a second battery pack housing 135, and a third battery pack 231 comprising a plurality of battery cells 233 arranged in a third battery pack housing 235. However, it should be mentioned that the battery pack arrangement 30 may comprise more, or fewer, battery packs than the three battery packs 31, 131, 231 of Fig. 2. For example, the battery pack arrangement 30 may comprise one, or at least one, battery pack, such as the first battery pack 31, or at least two battery packs, such as the first and second battery packs 31, 131. Throughout this description, the first, second and third battery packs 31, 131, 231 are sometimes referred to as the three battery packs 31, 131, 231 or simply the battery packs 31, 131, 231.

The battery pack arrangement 30 further comprises a battery pack service unit 40 including a service unit housing 42, the battery pack service unit 40 being configured to manage the first, second and third battery packs 31, 131, 231. Typically, the battery pack service unit 40 is a common, centralized, service unit for managing the three battery packs 31, 131, 231. The battery pack service unit 40 is electrically connected to the battery packs 31, 131, 231 by means of a power cable or power rail 60 arranged between each one of the first battery pack housing 35 and the service unit housing 42, the second battery pack housing 135 and the service unit housing 42, and the third battery pack housing 235 and the service unit housing 42. Hereby, power transmission between the first battery pack 31 and the service unit 40, between the second battery pack 131 and the service unit 40, and the third battery pack 231 and the service unit 40 is enabled. The first, second and third battery packs 31, 131, 231 are typically high voltage battery packs, and the power cable or power rail 60 configured for power transmission of high voltage current (i.e. current supplied at a high voltage). High voltage is typically referring to high voltage with regards to the vehicle, typically above 60 V, in contrast to low voltage systems, which are typically 12 V, 24 V, or even up to 48 V. The power cable or power rail 60 is e.g. configured for voltages over 300 V, such as e.g. between 300 V and 2000 V, or between 300 V and 1500 V.

As seen in Fig. 2, the first battery pack 31 comprises a battery pack terminal 32 electrically connected to the plurality of battery cells 33 of the first battery pack 31. The power cable or power rail 60 is coupled (e.g. mechanically and electrically connected) to the battery pack terminal 32 of the first battery pack 31. Thus, the battery pack terminal 32 forms a battery pack power interface between the first battery pack 31 and the power cable or power rail 60. Correspondingly, the battery pack service unit 40 comprises a service unit terminal 41 electrically connected to the first contactor 44. The power cable or power rail 60 is coupled (e.g. mechanically and electrically connected) to the service unit terminal 41. Thus, the service unit terminal 41 forms a service unit power interface between the battery pack service unit 40 and the power cable or power rail 60. Thus, the power cable or power rail 60 may extend from the battery pack terminal 32 of the first battery pack 31 to the service unit terminal 41. Even though not explicitly shown in Fig. 2, the second and third battery packs 131, 231 may comprise corresponding battery pack terminals and corresponding battery pack power interfaces, and the battery pack service unit 40 may comprise corresponding service unit terminals for the second and third battery packs 131, 231 with corresponding service unit power interfaces.

The battery pack arrangement 30 comprises a communication link 50 arranged between each one of the first battery pack housing 35 and the service unit housing 42, the second battery pack housing 135 and the service unit housing 42, and third battery pack housing 235 and the service unit housing 42. Hereby, data communication between the first battery pack 31 and the service unit 40, between the second battery pack 131 and the service unit 40, and between the third battery pack 231 and the service unit 40 is enabled. The communication link 50 may be configured for transmission of control signals and/or data exchange for monitoring, managing, and/or optimizing battery pack performance. The data transmitted by the communication link 50 may e.g. relate to State of Charge (SoC) of the battery packs, State of Health (SoH) of the battery packs, and/or voltage and current monitoring of the battery packs. Additionally or alternatively, the communication link 50 may be used for transferring battery cell and/or battery pack temperatures, error codes and warnings, isolation status, charging and discharging controls and/or balancing instructions. The communication link 50 may be configured according to various protocols tailored to e.g. automotive applications, e.g. Controller Area Network (CAN), Local Interconnect Network (LIN) and Ethernet.

The battery pack service unit 40 comprises at least a first contactor 44 configured to disconnect the first, second and third battery packs 31, 131, 231 from a load and/or a power source, e.g. the electric machine 10 of Fig. 1. For example, the battery pack service unit 40 comprises an outgoing terminal 49 configured to supply the electric machine 10 with propulsion power, wherein the first contactor 44 is configured to control the power supply of the outgoing terminal 49.

As described with reference to Fig. 1, the battery pack service unit 40 and the service unit housing 42 are arranged remotely of the battery packs 31, 131, 231 and the battery pack housings 35, 135, 235, as the battery packs 31, 131, 231 are arranged in the first location 1a and the battery pack service unit 40 is arranged in the second location 1b of the vehicle 1. Thus, the physical placement or position of the service unit housing 42 is different to, and separated from, the physical placement or position of the battery back housings 35, 135, 235. This is exemplified in Fig. 2 by that the service unit housing 42 is separated by a gap G from the first battery pack housing 35. However, the gap G may be defined with regards to each one of the second and third battery pack housings 135, 235 or between the first location 1a in which all of the battery packs 31, 131, 231 are arranged and the second location 1b in which the battery pack service unit 40 is arranged. The gap G may e.g. be at least 0.1 m. However, as previously described, despite the physical separation of the battery pack housings 35, 135, 235 and the service unit housing 42, the battery pack service unit 40 maintains a functional connection to the battery packs 31, 131, 231 through the communication link 50 and power cable or power rail 60, allowing for the management, monitoring, and control of the operation of the battery packs 31, 131, 231. In more detail, and with specific reference to the first battery pack 31, the first battery pack housing 35 comprises a first access opening 38 and the service unit housing 42 comprises a second access opening 48, wherein the power cable or power rail 60 is routed from the first battery pack 31, through the first access opening 38 to externally of both the battery pack housing 35 and the service unit housing 42, and to the battery pack service unit 40 through the second access opening 48. The first access opening 38 is typically adjacent the battery pack terminal 32 of the first battery pack 31, such that the power cable or power rail 60 easily can couple to the battery pack terminal 32 via the first access opening 38. Correspondingly, the second access opening 48 is typically adjacent the service unit terminal 41 of the battery pack service unit 40, such that the power cable or power rail 60 easily can couple to the service unit terminal 41 via the second access opening 48. The length of the power cable or power rail 60 is at least corresponding to the size of the gap G, here at least 0.1 m. Even though the first and second access openings 38, 48 have been described with reference to the first battery pack 31, corresponding access openings are typically included for the second and third battery packs 131, 231 for enabling the power cable or power rail 60 to be routed from the respective second and third battery packs 131, 231 through corresponding access openings of the second and third battery pack housings 135, 235 to externally of both the second and third battery pack housings 135, 235 and the service unit housing 42, and to the battery pack service unit 40 through corresponding access openings.

As seen in Fig. 2, the battery pack arrangement 30 comprises a plurality of second contactors 37, 137, 237, 46 wherein a first one 37 of the second contactors 37, 137, 237, 46 is comprised in the first battery pack housing 35, a second one 46 of the second contactors 37, 137, 237, 46 is comprised in the service unit housing 42, a third one 137 of the second contactors 37, 137, 237, 46 is comprised in the second battery pack housing 135 and a fourth one 237 of the second contactors 37, 137, 237, 46 is comprised in the third battery pack housing 235. For embodiments including only one, or two, battery packs 31, 131, 231, only the corresponding second contactors of such battery packs 31, 131, 231 is/are included in the battery pack arrangement 30, if included at all. Moreover, it should be noted that only one of, on the first hand, the second contactor(s) 37, 137, 237 comprised in the corresponding battery pack housing(s) 35, 135, 235, and on the other hand, the second contactor 46 comprised in the service unit housing 42, may be included in the battery pack arrangement 30. As a further alternative, none of the second contactors 37, 137, 237, 46 are included in the battery pack arrangement 30, or only the second one 46 of the second contactors 37, 137, 237, 46 is included. According to another example, the second one 46 of the second contactors 37, 137, 237, 46 is omitted, wherein the first one 37 of the second contactors 37, 137, 237 is simply referred to as a second contactor 37, the third one 137 of the second contactors 37, 137, 237 is simply referred to as a third contactor 137, and the fourth one 237 of the second contactors 37, 137, 237 is simply referred to as fourth contactor 237.

The first one 37 of the second contactors 37, 137, 237, 46 is configured to connect, and disconnect, the first battery pack 31 to, and from, the load and/or power source 10, and in the example of Fig. 2, also to, and from, the second and third battery packs 131, 231. The first one 37 of the second contactors 37, 137, 237, 46 may also be used to disconnect the battery pack terminal 32 of the first battery pack 31 (e.g. for disconnecting and removing the first battery pack 31 from the power cable or power rail 60). Correspondingly, the third one 137 of the second contactors 37, 137, 237, 46 is configured to connect, and disconnect, the second battery pack 131 to, and from, the load and/or power source 10, and in the example of Fig. 2, also to, and from, the first and third battery packs 31, 231. The third one 137 of the second contactors 37, 137, 237, 46 may also be used to disconnect a battery pack terminal of the second battery pack 131 (e.g. for disconnecting and removing the second battery pack 131 from the power cable or power rail 60). Correspondingly, the fourth one 237 of the second contactors 37, 137, 237, 46 is configured to connect, and disconnect, the third battery pack 231 to, and from, the load and/or power source 10, and in the example of Fig. 2, also to, and from, the first and second battery packs 31, 131. The fourth one 237 of the second contactors 37, 137, 237, 46 may also be used to disconnect a battery pack terminal of the third battery pack 231 (e.g. for disconnecting and removing the third battery pack 231 from the power cable or power rail 60).

The second one 46 of the second contactors 37, 137, 237, 46 is configured to connect, and disconnect, all of the three battery packs 31, 131, 231 to, and from, the load and/or power source 10 in a corresponding manner as the first contactor 44. As shown in Fig. 2, the first contactor 44 is arranged on a positive line (positive pole), and each one of the second contactors 37, 137, 237, 46 is arranged on a negative line (negative pole). Thus, the first contactor 44 may be referred to as a positive contactor and each one of the second contactors 37, 137, 237, 46 as a negative contactor. As shown in Fig. 2, each one of the first, third and fourth second contactors 37, 137, 237 is arranged adjacent a corresponding battery pack terminal 32, however it should be mentioned that they instead may be arranged between two battery cells 33, 133, 233 in the corresponding battery pack 31, 131, 231, e.g. between two battery cells inside the plurality of battery cells 33, 133, 233.

The battery pack service unit 40 may further comprise a PCB 45a with battery management functionality and a sensing board 45b configured to receive sensor data 90 of at least one, but typically all, of the battery packs 31, 131, 231, here exemplified for the first battery pack 31. Moreover, the battery pack arrangement 30 may comprise at least one sensor 39, here indicated as being arranged in the first battery pack 31 (but which typically is comprised in the second and third battery packs 131, 231 as well, correspondingly indicated in Fig. 2 without reference numerals). The sensor 39 may be configured to determine (e.g. measure) parameters of the first battery pack 31 or of the plurality of battery cells 33 of the first battery pack 31, such as e.g. temperature, current and/or voltage, and to provide such determined parameter(s) as sensor data 90. The sensor data 90 may be transferred to the battery pack service unit 40 and the sensing board 45b by the communication link 50. Even though not explicitly shown in Fig. 2, the second and third battery packs 131, 231 may comprise corresponding sensors.

The battery pack service unit 40 may further comprise a pre-charge circuitry 47 for the battery packs 31, 131, 231.

Owing to the configuration of the battery pack service unit 40, none of the battery packs 31, 131, 231 need to comprise a corresponding PCB, sensing board or pre-charge circuitry. Hereby, less space is needed for the battery packs 31, 131, 231, while maintaining desirable functionality of the battery packs 31, 131, 231.

The battery pack arrangement may further comprise a cooling circuity 70 arranged externally of the battery pack housings 35, 135, 235, wherein the cooling circuitry 70 is configured to cool the battery pack service unit 40. Typically, the cooling circuitry 70 for the battery pack service unit 40 is at least partly arranged inside, and/or in contact with, the service unit housing 42. The cooling circuitry 70 is typically routed externally of the first, second and third battery packs 31, 131, 231.

The battery pack arrangement 30 as disclosed herein may also be used in a stationary unit, such as a building and/or any stationary machinery.

Example 1. A battery pack arrangement comprising: a battery pack comprising a plurality of battery cells arranged in a battery pack housing; a battery pack service unit for managing the battery pack, the battery pack service unit being arranged in a service unit housing arranged remotely of the battery pack housing; a communication link arranged between the battery pack housing and the service unit housing for enabling the battery pack service unit to communicate with the battery pack; and a power cable or power rail arranged between the battery pack housing and the service unit housing for enabling transmission of a high voltage current between the battery pack and the service unit; wherein the battery pack service unit comprises at least a first contactor configured to disconnect the battery pack from a load and/or a power source.

Example 2. The battery pack arrangement of example 1, wherein the battery pack comprises a battery pack terminal electrically connected to the plurality of battery cells, and wherein the power cable or power rail is coupled to the battery pack terminal.

Example 3. The battery pack arrangement of any of examples 1-2, wherein the battery pack service unit comprises a service unit terminal electrically connected to the at least one contactor, and wherein the power cable or power rail is coupled to the service unit terminal.

Example 4. The battery pack arrangement of any of examples 1-3, further comprising a second contactor configured to disconnect the battery pack from the load and/or the power source, wherein the second contactor is comprised in the battery pack housing.

Example 5. The battery pack arrangement of example 4, wherein the first contactor is one of a positive and negative contactors for the battery pack, and the second contactor is the other one of the positive and negative contactors for the battery pack.

Example 6. The battery pack arrangement of any of examples 1-3, further comprising a second contactor configured to disconnect the battery pack from the load and/or the power source, wherein the second contactor is comprised in the battery pack service unit.

Example 7. The battery pack arrangement of any of examples 4-5 and example 6, comprising a plurality of second contactors, wherein the second contactor comprised in the battery pack housing is a first one of the second contactors, and the second contactor comprised in the battery pack service unit is a second one of the second contactors.

Example 8. The battery pack arrangement of any of examples 1-7, wherein the power cable or power rail has a length of at least 0.1 m.

Example 9. The battery pack arrangement of any of examples 1-8, wherein the battery pack housing comprises a first access opening and the service unit housing comprises a second access opening, wherein the power cable or power rail is routed from the battery pack, through the first access opening to externally of both the battery pack housing and the service unit housing, and to the battery pack service unit through the second access opening.

Example 10. The battery pack arrangement of any one of examples 1-9, wherein the battery pack service unit comprises a PCB with battery management functionality.

Example 11. The battery pack arrangement of any one of examples 1-10, wherein the battery pack service unit comprises at least a first pre-charge circuitry for the battery pack.

Example 12. The battery pack arrangement of any one of examples 1-11, wherein the battery pack service unit comprises a sensing board configured to receive sensor data of the battery pack.

Example 13. The battery pack arrangement of example 12, wherein the battery pack comprises at least one sensor for providing sensor data of the plurality of battery cells, and wherein the communication link is arranged to transfer the sensor data from the at least one sensor inside the battery pack housing, to the sensing board inside the service unit housing.

Example 14. The battery pack arrangement of any one of examples 1-13, further comprising a cooling circuity arranged externally of the battery pack housing, wherein the cooling circuitry is configured to cool the battery pack service unit.

Example 15. The battery pack arrangement of any one of examples 1-14, wherein the power cable or power rail is configured for voltages over 300 V, such as e.g. between 300 V and 2000 V, or between 300 V and 1500 V.

Example 16. The battery pack arrangement of any one of examples 1-15, wherein the battery pack is a first battery pack and the battery pack housing is a first battery pack housing, and wherein the battery pack arrangement further comprises a second battery pack comprising a plurality of battery cells arranged in a second battery pack housing, and wherein the communication link is further arranged between the second battery pack housing and the service unit housing for enabling the battery pack service unit to communicate with the second battery pack, and the power cable or power rail being further arranged between the second battery pack housing and the service unit housing for enabling transmission of a high voltage current between the second battery pack and the service unit.

Example 17. The battery pack arrangement of examples 5 and 16, wherein the first contactor is further configured to disconnect the second battery pack from the load and/or the power source, the first contactor being one of the positive and negative contactors for the first battery pack, and one of the positive and negative contactors for the second battery pack, and the second contactor being the other one of the positive and negative contactors for the first battery pack, and wherein the battery pack arrangement further comprises a third contactor configured to disconnect the second battery pack from the load and/or the power source and/or the first battery pack, the third contactor being the other one of the positive and negative contactors for the second battery pack, wherein the second and third contactors are comprised in the first and second battery pack housings, respectively.

Example 18. A vehicle comprising the battery pack arrangement of any of examples 1-17.

Example 19. The vehicle of example 18 further comprising a vehicle frame, wherein the battery pack housing and the service unit housing of the battery pack arrangement are arranged on opposite sides of the vehicle frame.

Example 20. The vehicle of any of examples 18-19, further comprising an electric machine for propelling the vehicle, the electric machine being powered by the battery pack arrangement.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack arrangement (30) comprising:
- a battery pack (31) comprising a plurality of battery cells (33) arranged in a battery pack housing (35),
- a battery pack service unit (40) for managing the battery pack (31), the battery pack service unit (40) being arranged in a service unit housing (42) arranged remotely of the battery pack housing (35),
- a communication link (50) arranged between the battery pack housing (35) and the service unit housing (42) for enabling the battery pack service unit (40) to communicate with the battery pack (31), and
- a power cable or power rail (60) arranged between the battery pack housing (35) and the service unit housing (42) for enabling transmission of a high voltage current between the battery pack (31) and the service unit (40),
wherein the battery pack service unit (40) comprises at least a first contactor (44) configured to disconnect the battery pack (31) from a load and/or a power source (10).

2. The battery pack arrangement (30) of claim 1, wherein the battery pack (31) comprises a battery pack terminal (32) electrically connected to the plurality of battery cells (33), and wherein the power cable or power rail (60) is coupled to the battery pack terminal (32).

3. The battery pack arrangement (30) of any of claims 1-2, wherein the battery pack service unit (40) comprises a service unit terminal (41) electrically connected to the at least one contactor (44), and wherein the power cable or power rail (60) is coupled to the service unit terminal (41).

4. The battery pack arrangement (30) of any of claims 1-3, further comprising a second contactor (37) configured to disconnect the battery pack (31) from the load and/or the power source (10), wherein the second contactor (37) is comprised in the battery pack housing (35).

5. The battery pack arrangement (30) of claim 4, wherein the first contactor (44) is one of a positive and negative contactors for the battery pack (31), and the second contactor (37) is the other one of the positive and negative contactors for the battery pack (31).

6. The battery pack arrangement (30) of any of claims 1-3, further comprising a second contactor (46) configured to disconnect the battery pack (31) from the load and/or the power source (10), wherein the second contactor (46) is comprised in the battery pack service unit (40).

7. The battery pack arrangement (30) of any of claims 4-5 and claim 6, comprising a plurality of second contactors (37, 46), wherein the second contactor (37) comprised in the battery pack housing is a first one (37) of the second contactors (37, 46), and the second contactor (46) comprised in the battery pack service unit (40) is a second one (46) of the second contactors (37, 46).

8. The battery pack arrangement (30) of any of claims 1-7, wherein the power cable or power rail (60) has a length of at least 0.1 m.

9. The battery pack arrangement (30) of any of claims 1-8, wherein the battery pack housing (35) comprises a first access opening (38) and the service unit housing (42) comprises a second access opening (48), wherein the power cable or power rail (60) is routed from the battery pack (31), through the first access opening (38) to externally of both the battery pack housing (35) and the service unit housing (42), and to the battery pack service unit (40) through the second access opening (48).

10. The battery pack arrangement (30) of any one of claims 1-9, wherein the battery pack service unit (40) comprises a PCB (45a) with battery management functionality.

11. The battery pack arrangement (30) of any one of claims 1-10, wherein the power cable or power rail (60) is configured for voltages over 300 V, such as e.g. between 300 V and 2000 V, or between 300 V and 1500 V.

12. The battery pack arrangement (30) of any one of claims 1-11, wherein the battery pack (31) is a first battery pack (31) and the battery pack housing (35) is a first battery pack housing (35), and wherein the battery pack arrangement (30) further comprises a second battery pack (131, 231) comprising a plurality of battery cells (133, 233) arranged in a second battery pack housing (135, 235), and wherein the communication link (50) is further arranged between the second battery pack housing (135, 235) and the service unit housing (42) for enabling the battery pack service unit (40) to communicate with the second battery pack (131, 231), and the power cable or power rail (60) being further arranged between the second battery pack housing (135, 235) and the service unit housing (42) for enabling transmission of a high voltage current between the second battery pack (131, 231) and the service unit (40).

13. The battery pack arrangement (30) of claims 5 and 12, wherein the first contactor (42) is further configured to disconnect the second battery pack (131, 231) from the load and/or the power source (10), the first contactor (42) being one of the positive and negative contactors for the first battery pack (31), and one of the positive and negative contactors for the second battery pack (131, 213), and the second contactor (37) being the other one of the positive and negative contactors for the first battery pack (31), and wherein the battery pack arrangement (30) further comprises a third contactor (137, 237) configured to disconnect the second battery pack (131, 231) from the load and/or the power source (10) and/or the first battery pack, the third contactor (137, 237) being the other one of the positive and negative contactors for the second battery pack (131, 231), wherein the second and third contactors (37, 137, 237) are comprised in the first and second battery pack housings (35, 135, 235), respectively.

14. A vehicle (1) comprising the battery pack arrangement (30) of any of claims 1-13.

15. The vehicle (1) of claim 14 further comprising a vehicle frame (2), wherein the battery pack housing (35) and the service unit housing (42) of the battery pack arrangement (30) are arranged on opposite sides of the vehicle frame (2).
